# EUROPEAN PATENT SPECIFICATION

(11) **EP 1 389 398 B1**
(45) Date of publication and mention of the grant of the patent: **10.03.2010**
(21) Application number: 02724867.3
(22) Date of filing: 25.04.2002
(51) Int. Cl.: H04W 4/00, H04W 4/24

(54) **Telephone exchange and method for allowing a mobile telephone to reply free-of-charge to a message**
Vermittlungssystem und Verfahren, wobei die kostenfreie Antwort eines Mobiltelefons auf eine Nachricht ermöglicht wird
Système de commutation et procédé pour permettre un téléphone mobile de répondre gratuitement à un message

(30) Priority: 27.04.2001 SE 0101520
(43) Date of publication of application: 18.02.2004
(73) Proprietor: Tieto Oyj, 00441 Helsinki (FI)
(72) Inventor: HAMMARQVIST, Per, S-112 49 Stockholm (SE); BERG, Rikard, S-115 20 Stockholm (SE)
(74) Representative: Agvald-Glas, Kerstin Gunilla
(86) International application number: PCT/SE2002/000813
(87) International publication number: WO 2002/089506

(56) References cited:
- EP-A- 1 069 792
- WO-A-00/41415
- WO-A-01/37537
- WO-A-98/56202
- DE-A- 19 644 386
- US-A- 5 867 780

## Description

### Technical area

The present invention relates to a telephone exchange in a cellular mobile telecommunication system, and to a method for operating a telephone exchange that has a computer included or connected.

### Prior art

It is possible to carry out so-called Gallop polls with the aid of messages in a mobile net, for example by using Short Message Services (SMS) in Groupe Special Mobile/Global System for Mobile communication (GSM) or other similar messaging systems in cellular mobile telecommunication networks with other designations.

An opinion research institute can, for example, send out questions in an SMS, whereby the owner of a mobile station (MS) asked replies by sending a return SMS. A disadvantage of such a method is that in Sweden, the person asked bears the cost, about 2 Swedish crowns, of sending a reply to a question. This cost means the person asked is very reluctant to reply. In addition, it is difficult and time-consuming for the person asked to write and send a return SMS.

When people in Gallop polls do not reply, the reliability of such polls is reduced in that their statistical certainty cannot be guaranteed. As such, the cost, time and difficulty of a reply message constitute a problem for Gallop polls.

If the user of a mobile telephone can free-of-charge, simply and quickly reply to messages, it also opens up possibilities to use the mobile telephone without cost to, for example, free-of-charge, simply and quickly play games or take part in competitions where the game or competition is not incorporated in the MS.

Document WO 00/41415 titled "Method for collecting and processing answers to at least one question" describes a method for voting via a mobile telephone. In the claim, it is implied that it can be desirable for those voting by telephone not to have to pay for the voting call. The document does not describe or specify how it is achieved that the telephone is not invoiced for such a call. It is presumed that the voting takes place via a free-phone number made available by the mobile operator, such as certain 020 numbers in Sweden.

Patent document US-A-5 867 780 by Malackowski et al with the title "Access Free Wireless Telephony Fulfilment Service System" describes access to information for a subscriber who receives a call by the subscriber stating an access code to obtain the information.

### Summary of the described invention

WO 01/37537 discloses a method for offering a free answer message in a telecommunication system. According to the method, a first subscriber is debited for a message sent by him/her, as well as for the answer message sent by the second subscriber. Thus, the second subscriber is given a possibility to send a free answer message.

EP 1 069 792 describes a radio telecommunications network for providing information services to a mobile subscriber. An Agent Meeting Place (AMP) is provided, where software agents can perform tasks or missions. An agent connects to the AMP by calling a toll-free number.

A goal of the present invention is that a person asked shall be able to reply free-of-charge to a message received. By the present invention allowing the user of a mobile telephone to reply to the message without cost, it can also be used to, for example, play games or take part in competitions free of charge where the game or competition is not incorporated in the MS.

To achieve the goals with the present invention, a telephone exchange connected to a cellular mobile telecommunication system with a telephone exchange that has a computer included or connected and which free-of-charge accepts attempts to connect calls as replies to messages sent to a mobile station, and which refuses attempts to connect calls, and which forwards the messages, is specified. The exchange hereby comprises:
- means for sending a message, including at least one reply alternative, to at least one receiving mobile station via said network, wherein each reply alternative is arranged to be associated with a predetermined number in said exchange;
- means for receiving alternative replies chosen in the mobile station that, at initiation of a call attempt, are arranged to connect each reply among the reply alternatives to a pre-determined number provided in the exchange for each reply alternative;
- means for registration in a database information about initiated call attempts to connect to the pre-determined number in the exchange for each reply alternative or for registration of a requested service or for determine further subsequent message to be sent to the mobile station:
- means for disconnecting attempts to connect calls from each one of said at least one receiving mobile station;
- means for choosing, in response to an identified reply alternative, to either send said subsequent messages to said mobile station, or to disconnect the communication.

One embodiment of the present invention comprises an exchange means for disconnecting received attempts to connect calls from the network, whereby an A-number subscriber is not charged for a call.

Another embodiment of the invention comprises the exchange sending a call-reject message to the network, whereby an A-number subscriber is not charged for a call.

Yet a further embodiment of the invention comprises the exchange sending at least one new reply alternative depending on the initiated reply to the first named reply alternative over a network for data and telecommunication, whereby the transmission of the message can be broken on the initiative of the mobile station user or the exchange.

A program or an algorithm in MS can identify and remove at least one of the previous messages sent to the exchange with the help of, for example, signalling over an Over The Air (OTA) platform and STK (Sim Tool Kit), for example, whereby, for example, older messages are replaced by newer ones.

In one embodiment of the present invention, the exchange 120 signals to MS 130 via the system 100, e.g. via an OTA platform, that MS 130 shall change at least one stored telephone number to a name associated with a telephone number (normally, these are found in the telephone directory of the mobile station) through, e.g. a program or an algorithm in STK, Java®, etc. This allows the reply alternatives to be presented in a clearer manner in certain mobile stations for the user.

In one embodiment of the present invention, the exchange sends at least parts of a page from an open or closed network, e.g. Internet 150, where links, e.g. hyperlinks, are replaced or added to with numbers of reply alternatives, whereby the mobile station 130, via attempts to connect calls, can initiate transmission of Internet pages via attempts to connect calls, whereby mobile station 130 is normally not charged with the cost of the attempts to connect the call.

Another embodiment of the invention comprises that the said transmission of the message comprises an offer of the chance of a reward when replying to one of the reply alternatives.

In one embodiment, the database is connected to a game generator that, among other things, transmits reply alternatives for activities in the game depending, for example, on the geographical location of the mobile station, the time of day and other positioning and time input data.

In addition, the present invention also specifies a method for operating a telephone exchange that has a computer included or connected, and which is connected to a network for data and telecommunication. The method comprises the following steps:
- sending a message, including at least one reply alternative, to at least one receiving mobile station via said network, where each reply alternative is associated with a predetermined number in said exchange;
- receiving alternative replies chosen in the mobile station that, at initiation of a call attempt, are arranged to connect each reply among the reply alternatives to a pre-determined number provided in the exchange for each reply alternative
- registering initiated calls to a number in the exchange on a memory location in the database;
- disconnecting calls from each one of said at least one receiving mobile station, whereby the mobile station is not subjected to a charge for the call; and
- choosing, depending on an action coupled to an identified reply alternative to either send subsequent messages or to disconnect the transmission.

The method described above can also include embodiments according to that stated in the dependent claims coupled to the method.

### Brief description of the drawings

For a better understanding of the invention and its examples and embodiments, reference is made to the attached illustrations in the descriptive text that follows, whereby:
**Fig. 1** illustrates a system connected to a telephone exchange according to the present invention;
**Fig. 2** illustrates schematically, in the form of a block diagram, one embodiment of the present invention after an MS has received a message;
**Fig. 3** illustrates schematically, in the form of a block diagram, another embodiment of the present invention after an MS has received a message; and
**Fig. 4** illustrates schematically, in the form of a block diagram, an embodiment of the present invention where a user initiates contact with the system according to Fig. 1.

### Detailed description of preferred embodiments

The present invention constitutes a telephone exchange in the form that it comprises a telephone exchange connected to a cellular mobile telecommunication network that can receive incoming attempts to connect calls for several telephone numbers, i.e. at least two numbers associated with the exchange.

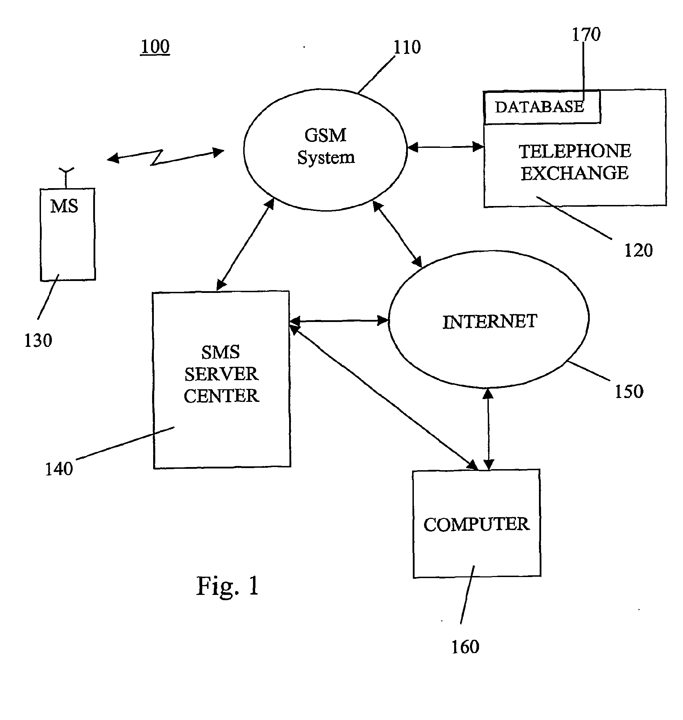

Fig. 1 illustrates schematically one embodiment of a system 100 with a telephone exchange connected according to the present invention. A cellular mobile telecommunication network 110, here GSM, is included or used in system 100. In addition, a telephone exchange 120, possibly connected to a computer or including a computer (not shown), is also included. A modem telephone exchange is, of course, computerised. The system communicates with, among other things, an MS 130 of a user, here, for example, via SMS. To be able to function, the present invention comprises an SMS server 140, often designated SMS center, for distribution to and from units in the system 100; as indicated with double-ended arrows in Fig. 1. SMS center 140 can naturally also be included in system 100. Even more servers can be made available for SMS services.

System 100 can also use Internet for distributing SMS to, for example, a computer 160.

To achieve the purpose and goals of the present invention, a telephone exchange system 100 connected to a cellular mobile telecommunication system 110 with a telephone exchange 120 that has a computer included or connected and which free-of-charge accepts attempts to connect calls as replies to messages sent to a mobile station 130, and which refuses attempts to connect calls, and which forwards the messages, is thus specified. In one embodiment, the system comprises a means of connection to an SMS server for distributing the messages in a network. Such a means can comprise existing channels for data and telecommunication such as copper and fibre-optic cables, wireless distribution, etc. A means of sending a message, including at least one reply alternative, to at least one receiving mobile station 130 in a network comprises known components in a cellular mobile telecommunication system for SMS via a server 140.

In addition, system 100 comprises an alternative reply means in the mobile station 130 that at initiation connects each reply among the reply alternatives to a pre-determined identity for each alternative in the exchange. The alternative reply means comprises, for example, a set of keypads, tangents, voice control, programs, algorithms, etc. in MS 130 with associated functions in the form of hardware, software or a combination of both. A software for registering reply alternative calls in a database 170 is used as a means of registration for initiated attempts to connect reply alternative calls in a database 170 connected to exchange 120 or included in the same on a memory location in the database 170 that is reserved for initiated reply alternatives. The software for registration also counts the number of replies for each memory location and generates other statistics in connection with evaluating the reply alternatives.

System 100 also comprises a means of A-number identification for A-numbers in the mobile station 130 subscriber number via known means for this. The A-number is stored in the database 170 to identify the service that the subscriber of MS 130 uses.

System 100 also comprises a means of B-number identification for B-numbers of the telephone exchange system 120 subscriber number via known means for this. The B-number or equivalent identity is stored in the database 170 for registering the reply alternatives that the subscriber of MS 130 has chosen.

System 100 also comprises a disconnecting function in exchange 120 for attempts to connect calls from mobile station 130 via, for example "call-rejection" in the exchange, whereby the mobile station is not normally subjected to a charge for the call. It is important that MS 130 is not liable for any costs so that Gallop polls can be able to provide statistically certain results.

A means of action is found in the system 100 in the form of software that retrieves actions stored in the database 170 for choosing to send further messages, e.g. messages depending on A-number, for example, or depending on action coupled to an identified reply alternative, or to a break in transmitting the message.

How the system works to achieve the aim of the present invention is described in more detail below.

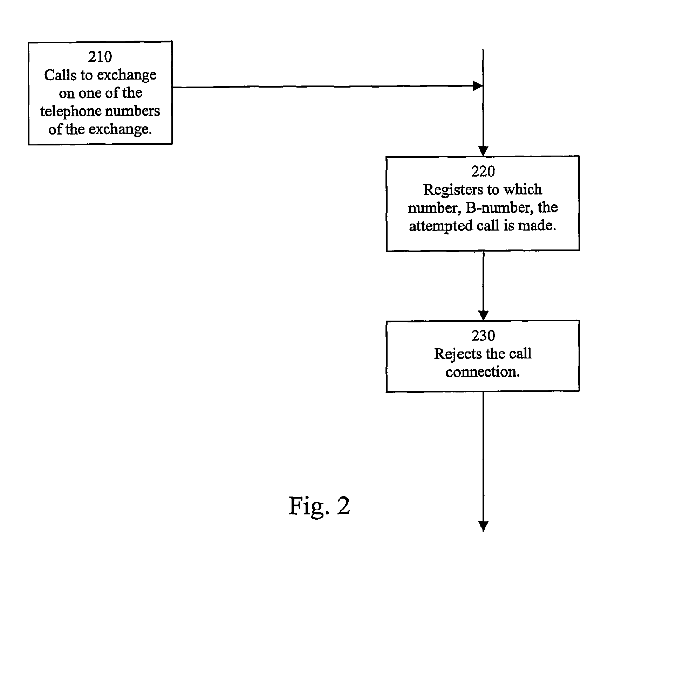

Fig. 2 illustrates schematically, in the form of a block diagram, one embodiment of the present invention after an MS has received a message. When a person calls with a mobile station MS to any of one or several pre-determined subscriber numbers, the following events, among others, take place in the system according to the present invention, see Fig. 2:
1. The system 100 registers the attempted call in a database 220.
2. The system 100 disconnects or breaks the attempted call 230, i.e. it does not "respond" to the call.

According to the present invention, this variation can be used to, for example, ask a yes/no question in, for example, a morning newspaper. "Do you eat porridge for breakfast? Answer "YES" by ringing tel, no, XXX001, or "NO" by ringing tel, no, XXX002."

If and when a newspaper reader calls one of these numbers, with an ordinary voice call, this will reach the exchange, which registers the attempted call, i.e. in this case count the respective number of yes or no votes. Exchange 120 then disconnects the attempted call, i.e. sends a "reject" message back to the telephone network or simply disconnects the contact with the telephone network. Alternatively, the user hears the signal tone that he or she has reached the exchange and decides them self to disconnect the attempt to connect the call after a short time.

MS 130, as mentioned above, is intended to refer to an arrangement that comprises mobile telephone functions, such as a mobile telephone, Personal Digital Assistant (PDA) and similar communication equipment.

Message as mentioned above is intended to refer to, for example, a Short Message Service (SMS), Multimedia message (MMS), Enhanced Short Message Service (EMS), HTML pages, e-mail and similar.

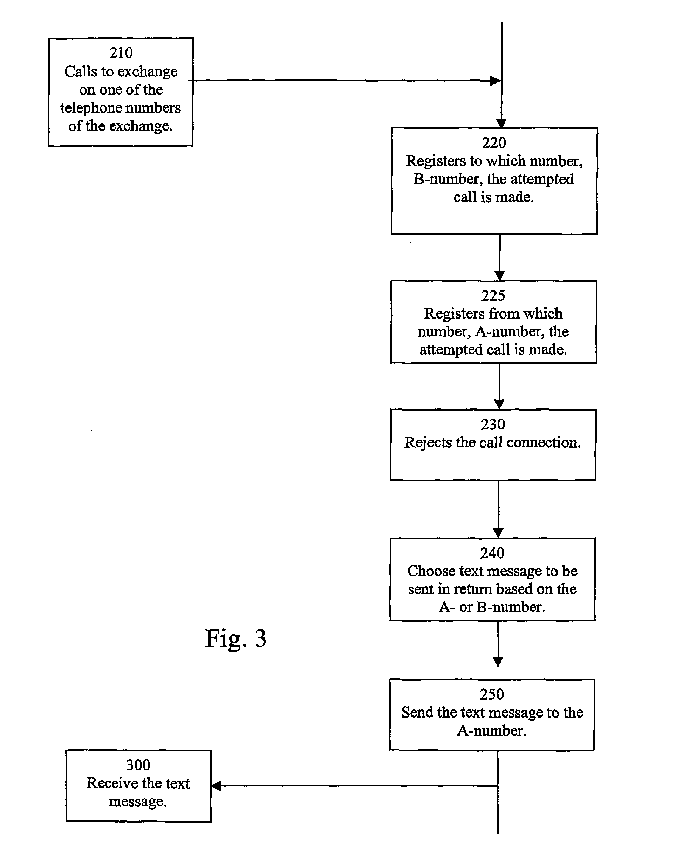

Fig. 3 illustrates schematically, in the form of a block diagram, another embodiment of the present invention after an MS has received a message.

According to that named above, the present invention comprises a system 100 including a telephone exchange 120, or a combination of computer and exchange, connected to a telephone network 110 that can receive incoming calls to several, at least two, different telephone/subscriber numbers. In one embodiment of the invention according to Fig. 3, the following happens:
1. System 100 sends, for example, an SMS to one or more MS numbers. When a person/user calls 210 to any of the pre-determined numbers that are, for example, specified as reply alternatives, four events take place in system 100:
2. System 100 registers 220 the attempted call in a database 170.
3. System 100 registers 225 the subscriber number, the A-number, of the incoming call
4. System 100 disconnects 230 the attempted call.
   4b. If so intended, the exchange (120) writes/selects 240 at least one SMS based on the number 220, see step 2, to which the attempted incoming call was made, from which number 225, see step 3, the incoming attempted call was made, or, for example, the time or place.
5. System 100 sends 250 an SMS in return to the number registered 225 in stage 3, whose MS receives the message 300.

This embodiment according to the present invention achieves, for example, a more detailed opinion poll survey.

In step 1, an SMS is sent either through the arrangement being connected to a mobile telephone or through the system being connected to Internet or a similar open network and sending an SMS via an Internet 150 site, or connected directly to a message centre, e.g. SMS server.

The SMS comprises a question, as in the example about porridge. The person receiving the question replies by calling one of the numbers to the exchange.

In steps 2 and 3, the exchange registers the chosen alternative and from which number the voter called. The actual order of events between steps 2 and 3 is not significant. According to step 4, the exchange disconnects 230 the attempted call. Step 5 causes the system 100 to send a new SMS 300 with new questions to the person who attempted to call. "Which tastes best? Raspberry (call XXX003); Bilberry (call XXX004); Cowberry (call XXX005)". Following this, steps 2, 3, 4 and 5 are repeated until all questions have been answered.

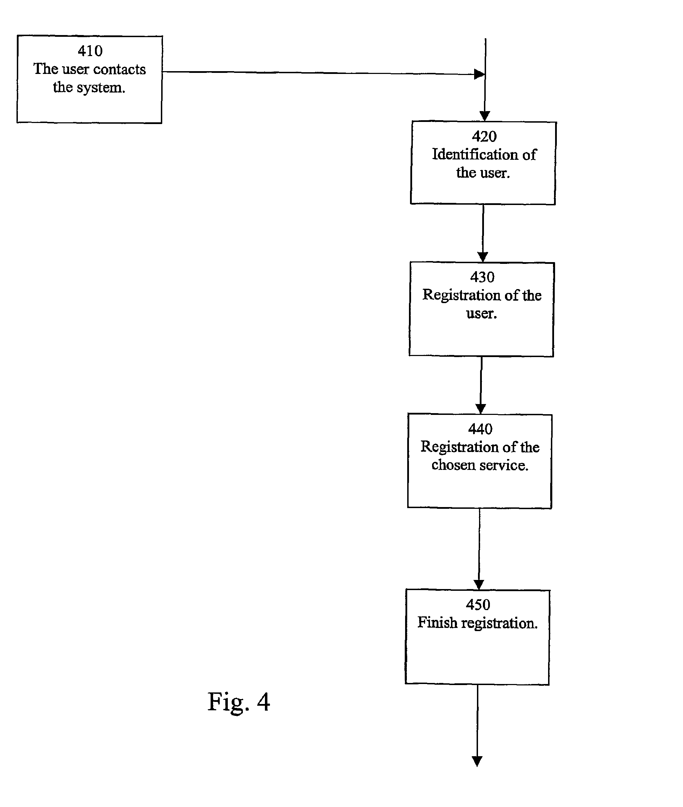

Step 4b is useable and preferable for games or quizzes, as described in more detail later. In this way, the user of the MS, with the help of the system described above, can answer questions and play games in the system without it costing the user anything. To illustrate the invention in more detail, five examples of scenarios in the form of general examples from a user perspective and that can be performed with the present invention are described. Fig. 4 illustrates schematically in a block diagram an embodiment of the present invention where a user initiates contact with the system according to Fig. 1.
1. A user reads in the newspaper:
   "Today's question in Metro^{®}
   Do you want the chance to win a crate of Coca Cola^{®}? Then call 08-XXX000 from your mobile telephone. It's completely free and you find out if you've won right after the questions".
2. The user calls the number 08-XXX000 and is disconnected directly. An SMS is sent to the user saying "Do you think that politician X should resign because of scandal Y (08-XXX001) or do you think he should keep his position (08-XXX002). If you don't know (08-XXX003).
3. The user presses the "Yes" button when the number 08-XXX002 is in the MS display.
4. A new SMS is sent to the user:
   What is the colour of the new Virgin Coke^{®} drink that is now available at 7-eleven^{®}?
   Blue bottle 08-XXX004 or black bottle 08-XXX005?"
5. The user attempts to make a call for the chosen alternative by pressing, for example, the "Yes" button when the number 08-XXX004 is in the MS display.
6. A new SMS is sent to the user:
   "Congratulations, you've answered correctly! 7-eleven are pleased to announce that this drink is available in their stores 24-hours a day starting today."
7. A new SMS is sent to the user:
   "55% of those who replied to Metro's reader question think that politician X should resign, 30% think he should keep his position, and 15% don't know. Metro^{®} wishes you pleasant reading." This is achieved without it costing an MS user anything, at the
   same time as the cost to the client is minimal.

Five examples (1-5) that may use the present invention follow.

### Example 1. Daily newspaper survey

1. Reader question in the newspaper. Do you think that...

| | |
|---|---|
| A, Yes | 08-XXX001 |
| B, No | 08-XXX002 |
| C, Don't know | 08-XXX003 |

2. The user of the communication equipment calls the chosen alternative.
3. The attempt to connect the call is rejected by exchange 120.
4. The exchange identifies the number to which the call was attempted and registers the chosen alternative in, for example, a database.
5. The person who responds is traditionally not charged for the attempted connection.

### Example 2. Daily newspaper survey with response

Survey by the daily newspaper where a response is returned to the user, i.e. there is a need to identify the user of the communication equipment/MS or where the MS is previously identified.
1. Reader question in the newspaper. Do you think that...

| | |
|---|---|
| A, Yes | 08-XXX001 |
| B, No | 08-XXX002 |
| C, Don't know | 08-XXX003 |

2. The user of the communication equipment calls the chosen alternative.
3. Identification of the user through, for example, CLI, "Calling Line Identification", or through unique telephone numbers for every user for every question.
4. The attempt to connect the call is rejected by exchange 120.
5. The exchange identifies the number to which the call was attempted and registers the chosen alternative in, for example a database.

This means that the respondent can receive a follow-up message, e.g. an SMS, where, for example, the reply statistics are presented, or where a follow-up question is put. The method described above is repeated for a follow-up question.

### Example 3. Game, e.g. quiz, survey

The quiz is initiated via, for example, Internet, newspapers, attempts to connect calls to specific numbers, SMS, or through membership in "Today's mobile phone quiz" that transmits questions every morning. Following this, the user receives an SMS in his mobile telephone/communication equipment with the first question, and can thereby get started with answering questions or playing.
1. Initiation of the quiz via, calling specific numbers, for example, or through membership in "Today's mobile phone quiz" that transmits questions every morning.
2. The question is sent via, for example, SMS to the mobile of the user. Question 1, What are the two basic colours of Coca Cola^{®}?

| | |
|---|---|
| A, Black & white | 08-XXX001 |
| B, White & red | 08-XXX002 |
| C, Red & black | 08-XXX003 |

3. The user calls/selects a specific reply alternative.
4. Identification of the user through, for example, CLI, "Calling Line Identification", or through unique telephone numbers for every user for every question.
5. The attempt to connect the call is rejected by exchange 120.
6. The exchange 120 identifies the number to which the call was attempted and registers the chosen alternative in, for example, a database.

Further questions are now allowed to follow. Based on the chosen and registered alternatives, the system transmits a new question with one or more reply alternatives. The system need not always send out a question, but can send a message between two questions, e.g. an SMS "Now you have only four questions left until you have won a crate of Coca Cola^{®} from 7-eleven^{®} who are open 24-hours a day". The system sends out follow-up questions according to a set order/algorithm that can be both dependent on or independent of the replies that the user gives to the respective questions, following the method described above. In a survey, the same seven questions, for example, are sent out in a pre-determined order irrespective of the reply to the specific question, while in another survey, the system takes into account the reply alternatives that the respondent has provided and transmits the follow-up question or message that is coupled to the respective reply alternative. This can apply to both games as well as to different sorts of surveys where it is possible to alter the reply alternative from one occasion to the next.

### Example 4. Position-based games

1. The game is initiated by the user taking up a certain geographic position and receiving, for example, an SMS.
"You have just entered Sergel's Torg. Your cyber opponent is about to throw a bomb at you. What do you do?"
A, Move 08-XXX001
B, Attack him with suitable weapons 08-XXX002
C, Hide in the subway entrance 08-XXX003

2. Through identifying the chosen alternative according to the description in the previous example, the game knows which course of action the player has chosen to follow.
3. Depending on the chosen course of action alternative, the system sends out new questions/input data, e.g. via SMS, to the player. In this way, the game process proceeds until a conclusion is defined. The player is identified either by number presentation or by each player having a unique number per course of action alternative. In one embodiment, the reply alternatives for two different players in the same game appear as below.

| Player A | |
|---|---|
| A, Move | 08-X00001 |
| B, Attack him with suitable weapons | 08-X00002 |
| C, Hide in the subway entrance | 08-X00003 |
| | |

| Player B | |
|---|---|
| A, Move | 08-X00011 |
| B, Attack him with suitable weapons | 08-X00012 |
| C, Hide in the subway entrance | 08-X00013 |

In addition, the players can receive different reply alternatives depending on other input data in the game, e.g. player B instead receives the alternative

| Player B (with other alternative courses of action) | |
|---|---|
| A, Run into the culture house building and buy two theatre tickets | 08-X00011 |
| B, Threaten the opponent with your gun | 08-X00012 |
| C, Hide in the subway entrance | 08-X00013 |

In one embodiment of the invention, a game is created through database 170 being connected to a game generator (not shown) that sends reply alternatives for other activities in the game depending on the geographical position of the mobile station 130. The game generator may preferably be software that generates reply alternatives and game rules and that also comprises the structure of the game.

### Example 5. Linking for mobile Internet

By transmitting parts or whole Internet pages as messages, it is possible, with the help of the present invention, for a user of an MS 130 to "click on links" and read Internet pages without having to pay for the amount of information that it normally costs to transfer when the user "clicks on links" to link himself to a page on Internet. The example below shows how this is possible.
1. With the MS 130, the user initiates that a pre-determined page on the Internet, e.g. www.news.now is to be sent as a message to MS 130 by calling the number 08-XXX001.
2. The exchange 120 downloads the Internet page www.news.now in a memory intended for this, and possibly alters the style so that it fits the MS 130.
3. The exchange 120 exchanges/complements the links of the Internet page with A-number for at least one of the links and transmits the Internet page as a message to MS 130 according to the short example below:
   News - from www.news.now 08-XXX001
   Here is today's news
   Scandal politician resigns
   Yesterday, politician X resigned following an extensive credit card scandal. Politician
   X is believed to have embezzled at least one hundred thousand crowns and his resignation has thus been demanded by, among others, colleagues in his party. 08-XXX002
   Modo win Swedish championship
   Modo's floor ball team won after a tough match against Djurgården IF floor ball.
   Player Y had an outstanding match almost certainly merits the Golden Ball award. 08-XXX003
4. The exchange 120 registers that the message has been transmitted to MS 130.
5. The user reads the message and "clicks on the link" about the scandal politician by calling 08-XXX002 with his MS 130. This can be done by, for example, pressing the "yes" button where the number is marked in the display of MS 130.
6. The exchange 120 registers the attempt to connect the call to number 08-XXX002 from MS 130.
7. The exchange 120 downloads the Internet page about the scandal politician www.news.now/scandalpolitician in a memory intended for this and possibly alters its style so that it fits MS 130 by, for example, removing photos are shortening long text.
8. The exchange 120 exchanges/complements the links of the Internet page with A-number for at least one of the links and transmits the Internet page as a message to MS 130 according to the short example below:
   News - from www.news.now 08-XXX001
   Scandal politician resigns
   It is now three weeks since it was revealed that politician X has not accounted for his expenses in a correct manner. Among other things, politician X does not have receipts for half of the expenses he has had in connection with his restaurant visits. The head of the inquiry into the matter feels that politician X will receive a lengthy punishment...08-XXX002.
   Read previous articles about politician X 08-XXX003?
   Opposition politician Z believes that one should not spend taxpayers' money in the way that politician X has done. 08-XXX004
9. The user of the communication equipment reads the message and "clicks on the link" about what the opposition politician thinks by calling 08-XXX004 with his MS 130. This can be done by, for example, pressing the "yes" button where the number is marked in the display of MS 130.

In this way, the user has access to Internet on his MS 130 and in certain cases need not pay for it.

The uplink-channel, the link that tells the system the next page that the user wants to read, need not be paid for by the user as it is registered as a normal unconnected call. At the same time, it is normally free-of charge for the user to receive the message, which allows, for example, a form of free mobile Internet with the help of the present invention.

Fig. 4 illustrates schematically, in the form of a block diagram, an embodiment of the present invention where a user initiates contact with the system according to Fig. 1 to choose a desired service in the system, e.g. type of game. The user contacts 410 the system with his MS and the exchange 120 identifies 420 the user, A-number, and registers 430 this in the system 100. In addition, the chosen service, in this case a round of games, is registered 440 in the database, following which the registration of the user and the service are concluded 450.

System 100 also carries out a method in a cellular mobile telecommunications system with a telephone exchange. The exchange 120 has a computer included or connected and which free-of-charge, simply and quickly accepts attempts to connect calls as replies to messages sent to a mobile station, and which refuses attempts to connect calls, and which forwards the messages. The method comprises the following steps:
connection to a server 140 for distributing the messages in a network;
transmitting a message, including at least one reply alternative, to at least one receiving mobile station 130 in a network;
initiating connection to a message in a mobile station that, at initiation, connects each reply among the reply alternatives to a pre-determined identity in the exchange 120 for each alternative;
registration of initiated attempts to connect reply alternative calls in a database 170 connected to the exchange 120 on a memory location in the database 170 that is reserved for initiated reply alternatives;
identification of A-numbers for the said mobile station;
disconnecting in the said exchange of attempts to connect calls from the said mobile station 130, whereby the mobile station 130 is normally not subjected to a charge for the attempts to connect calls; and
action for choosing to send further messages depending on action coupled to an identified reply alternative, or to a break in transmitting the message.

The means that are named in the present description comprise known software, hardware or a combination of the two for achieving the intended function of the means.

## Claims

1. A telephone exchange (120) that has a computer included or connected, and which is connected to a network for data and telecommunication (110, 150), said telephone exchange (120) comprising:
- means for sending a message, including at least one reply alternative, to at least one receiving mobile station (130) via said network (110, 150), wherein each reply alternative is arranged to be associated with a predetermined number in said exchange (120);
- means for receiving alternative replies chosen in said at least one mobile station (130) to said message, that, at initiation of a call attempt, are arranged to connect each reply among the reply alternatives to a pre-determined number provided in the exchange (120) for each reply alternative;
- means for registration in a database (170) of information about initiated call attempts to connect to the pre-determined number in the exchange for each reply alternative, or for registration of a requested service (440), or for determining further subsequent messages to be sent to the at least one receiving mobile station (130);
**characterised in** comprising:
- means for disconnecting attempts to connect calls from each one of said at least one receiving mobile station;
- means for choosing, in response to an identified reply alternative (240), to either send said subsequent messages to said at least are receiving mobile station (130), or to disconnect the communication.

2. The telephone exchange according to claim 1, **characterised in** comprising means for disconnecting (230) received attempts to connect calls from the network (110).

3. The telephone exchange according to claim 1, **characterised in that** said exchange (120) is arranged to send a call-reject (230) message to the network (110).

4. The telephone exchange according to claims 1-3, **characterised in that** said exchange (120) comprises a means to confirm the chosen alternative by voice or tone messages.

5. The telephone exchange according to any of claims 1-4, **characterised in that** said exchange (120) is arranged to send (240) at least one additional reply alternative (220, 225) over the network (110, 150), depending on the received reply alternative.

6. The telephone exchange according to any of claims 1-5, **characterised in that** the database (170) is connected to a game generator that is arranged to transmit reply alternatives for activities in the game.

7. The telephone exchange according to claim 6, **characterised in that** the reply alternatives depend on the geographical location of the mobile station (130) or the time of day.

8. The telephone exchange according to any of claims 1-7, **characterised in** comprising means for sending at least parts of a page from an open or closed network where links are replaced or added to with numbers of reply alternatives, thereby enabling the mobile station (130) to initiate transmission of Internet pages via attempts to connect calls, without being charged for the cost of the call.

9. A method for operating a telephone exchange (120) that has a computer included or connected, and which is connected to a network for data and telecommunication (110, 150), **characterised in** comprising the steps of:
- sending a message, including at least one reply alternative, to at least one receiving mobile station (130) via said network (110, 150), where each reply alternative is associated with a predetermined number in said exchange (120);
- receiving alternative replies chosen in said at least one mobile station (130) to said message, that, at initiation of a call attempt, are arranged to connect each reply among the reply alternatives to a pre-determined number provided in the exchange (120) for each reply alternative
- registering initiated call attempts to the pre-determined number in the exchange for each reply alternative on a memory location in a database (170);
- disconnecting call attempts from each one of said at least one receiving mobile station (130), whereby the mobile station (130) is not subjected to a charge for the call; and
- choosing, depending on an action coupled to an identified reply alternative (240) to either send subsequent messages to said at least one receiving mobile station (130), or to disconnect (230) the transmission.

10. The method according to claim 9, **characterised in** comprising the further step of disconnecting (230) received attempts to connect calls from the network (110), whereby an A-number subscriber is not charged for the attempt to connect a call.

11. The method according to claim 9, **characterised in that** the step of disconnecting the call involves sending a call-reject (230) message to the network (110), whereby an A-number subscriber is not charged for the attempt to connect a call.

12. The method according to any one of claims 9-11, **characterised in** comprising the further step of confirming the chosen alternative by voice or tone messages.

13. The method according to any one of claims 9-12 **characterised in** comprising the further step of sending (240) at least one additional reply alternative (220, 225) over the network (110, 150), depending on the first received reply alternative.

14. The method according to any one of claims 1-9, **characterised in** comprising the further step of sending at least parts of a page from an open or closed network where links are replaced or added to with numbers of reply alternatives, thereby enabling the mobile station (130) to initiate transmission of Internet pages via attempts to connect calls, without being charged for the cost of the call.

15. The method according to any one of claims 1-6, **characterised in** connecting the database (170) to a game generator that transmits reply alternatives for activities in the game.

16. The method according to claim 15, **characterised in that** the reply alternatives depend on the geographical location of the mobile station (130) or the time of day.

## Patentansprüche

1. Telephonvermittlungsstelle (120), die einen Computer enthält oder an die ein Computer angeschlossen ist und die mit einem Netz für Daten und Telekommunikation (110, 150) verbunden ist, wobei die Telephonvermittlungsstelle (120) enthält:
- Mittel zum Senden einer Nachricht, die wenigstens eine Antwortalternative enthält, zu wenigstens einer empfangenden Mobilstation (130) über das Netz (110, 150), wobei jede Antwortalternative dazu ausgelegt ist, einer vorgegebenen Nummer in der Vermittlungsstelle (120) zugeordnet zu werden;
- Mittel zum Empfangen alternativer Antworten, die in der wenigstens einen Mobilstation (130) gewählt werden, auf die Nachricht, die dazu ausgelegt sind, bei Beginn eines Anrufversuchs jede Antwort unter den Antwortalternativen mit einer vorgegebenen Nummer zu verbinden, die in der Vermittlungsstelle (120) für jede Antwortalternative vorgesehen ist;
- Mittel zum Registrieren von Informationen über begonnene Anrufversuche in einer Datenbank (170), um die vorgegebene Nummer in der Vermittlungsstelle für jede Antwortalternative zu verbinden, oder zum Registrieren eines angeforderten Diensts (440) oder zum Bestimmen weiterer nachfolgender Nachrichten, die zu der wenigstens einen empfangenden Mobilstation (130) gesendet werden sollen;
**dadurch gekennzeichnet, dass** sie enthält:
- Mittel zum Trennen von Versuchen zum Verbinden von Anrufen von jeder der wenigstens einen empfangenden Mobilstation;
- Mittel, um in Reaktion auf eine identifizierte Antwortalternative (240) zwischen dem Senden nachfolgender Nachrichten zu der wenigstens einen empfangenden Mobilstation (130) oder dem Trennen der Kommunikation zu wählen.

2. Telephonvermittlungsstelle nach Anspruch 1, **dadurch gekennzeichnet, dass** sie Mittel zum Trennen (230) empfangener Versuche zum Verbinden von Anrufen von dem Netz (110) enthält.

3. Telephonvermittlungsstelle nach Anspruch 1, **dadurch gekennzeichnet, dass** die Vermittlungsstelle (120) dazu ausgelegt ist, eine Anrufzurückweisungsnachricht (230) zu dem Netz (110) zu senden.

4. Telephonvermittlungsstelle nach den Ansprüchen 1-3, **dadurch gekennzeichnet, dass** die Vermittlungsstelle (120) ein Mittel enthält, um die gewählte Alternative durch Sprach- oder Tonnachrichten zu bestätigen.

5. Telephonvermittlungsstelle nach einem der Ansprüche 1-4, **dadurch gekennzeichnet, dass** die Vermittlungsstelle (120) dazu ausgelegt ist, wenigstens eine zusätzliche Antwortalternative (220, 225) in Abhängigkeit von der empfangenen Antwortalternative über das Netz (110, 150) zu senden (240).

6. Telephonvermittlungsstelle nach einem der Ansprüche 1-5, **dadurch gekennzeichnet, dass** die Datenbank (170) mit einem Spielegenerator verbunden ist, der dazu ausgelegt ist, Antwortalternativen für Aktivitäten in dem Spiel zu übertragen.

7. Telephonvermittlungsstelle nach Anspruch 6, **dadurch gekennzeichnet, dass** die Antwortalternativen vom geographischen Ort der Mobilstation (130) oder von der Tageszeit abhängen.

8. Telephonvermittlungsstelle nach einem der Ansprüche 1-7, **dadurch gekennzeichnet, dass** sie Mittel enthält, um wenigstens Teile einer Seite von einem offenen oder geschlossenen Netz, in dem Verknüpfungen durch Nummern von Antwortalternativen ersetzt oder zu diesen hinzugefügt sind, zu senden, um **dadurch** der Mobilstation (130) zu ermöglichen, die Übertragung von Internetseiten über Versuche zum Verbinden von Anrufen zu beginnen, ohne mit den Kosten des Anrufs belastet zu werden.

9. Verfahren zum Betreiben einer Telephonvermittlungsstelle (120), die einen Computer enthält oder an die ein Computer angeschlossen ist und die mit einem Netz für Daten und Telekommunikation (110, 150) verbunden ist, **dadurch gekennzeichnet, dass** es die folgenden Schritte enthält:
- Senden einer Nachricht, die wenigstens eine Antwortalternative enthält, zu wenigstens einer empfangenden Mobilstation (130) über das Netz (110, 150), wobei jede Antwortalternative einer vorgegebenen Nummer in der Vermittlungsstelle (120) zugeordnet ist;
- Empfangen alternativer Antworten, die in der wenigstens einen Mobilstation (130) gewählt werden, auf die Nachricht, die bei Beginn eines Anrufversuchs dazu ausgelegt sind, jede Antwort unter den Antwortalternativen mit einer vorgegebenen Nummer zu verbinden, die in der Vermittlung (120) für jede Antwortalternative vorgesehen ist;
- Registrieren begonnener Anrufversuche zu der vorgegebenen Nummer in der Vermittlungsstelle für jede Antwortalternative an einem Speicherplatz in einer Datenbank (170);
- Trennen von Anrufversuchen von jeder der wenigstens einen empfangenden Mobilstation (130), wodurch die Mobilstation (130) keiner Belastung für den Anruf unterworfen wird; und
- in Abhängigkeit von einer Aktion, die mit einer identifizierten Antwortalternative (240) gekoppelt ist, Wählen zwischen dem Senden nachfolgender Nachrichten zu der wenigstens einen empfangenden Mobilstation (130) oder dem Trennen (230) der Übertragung.

10. Verfahren nach Anspruch 9, **dadurch gekennzeichnet, dass** es ferner den Schritt des Trennens (230) empfangener Versuche zum Verbinden von Anrufen von dem Netz (110) enthält, wobei ein A-Nummern-Teilnehmer für den Versuch zum Verbinden eines Anrufs nicht belastet wird.

11. Verfahren nach Anspruch 9, **dadurch gekennzeichnet, dass** der Schritt des Trennens des Anrufs das Senden einer Anrufzurückweisungsnachricht (230) zu dem Netz (110) enthält, wodurch ein A-Nummern-Teilnehmer für den Versuch zum Verbinden eines Anrufs nicht belastet wird.

12. Verfahren nach einem der Ansprüche 9-11, **dadurch gekennzeichnet, dass** es den weiteren Schritt des Bestätigens der gewählten Alternative durch Sprach- oder Tonnachrichten enthält.

13. Verfahren nach einem der Ansprüche 9-12, **dadurch gekennzeichnet, dass** es den weiteren Schritt des Sendens (240) wenigstens einer zusätzlichen Antwortalternative (220, 225) über das Netz (110, 150) in Abhängigkeit von der ersten empfangenen Antwortalternative enthält.

14. Verfahren nach einem der Ansprüche 1-9, **dadurch gekennzeichnet, dass** es den weiteren Schritt des Sendens wenigstens von Teilen einer Seite von einem offenen oder geschlossenen Netz, in dem Verknüpfungen durch die Nummern von Antwortalternativen ersetzt oder zu diesen hinzugefügt sind, enthält, wodurch der Mobilstation (130) ermöglicht wird, eine Übertragung von Internetseiten über Versuche zum Verbinden von Anrufen zu beginnen, ohne mit den Kosten des Anrufs belastet zu werden.

15. Verfahren nach einem der Ansprüche 1-6, **dadurch gekennzeichnet, dass** die Datenbank (170) mit einem Spielegenerator verbunden wird, der Antwortalternativen für Aktivitäten in dem Spiel überträgt.

16. Verfahren nach Anspruch 15, **dadurch gekennzeichnet, dass** die Antwortalternativen vom geographischen Ort der Mobilstation (130) oder von der Tageszeit abhängen.

## Revendications

1. Central téléphonique (120) auquel est intégré ou relié un ordinateur, et qui est relié à un réseau (110, 150) de données et de télécommunications, ledit central téléphonique (120) comportant :
- un moyen destiné à envoyer un message, comprenant au moins une variante de réponse, à au moins une station mobile réceptrice (130) via ledit réseau (110, 150), chaque variante de réponse étant agencée de façon à être associée à un numéro prédéterminé au sein dudit central (120) ;
- un moyen destiné à recevoir des variantes de réponse audit message choisies au niveau de ladite ou desdites stations mobiles (130) et qui, lors de l'amorce d'une tentative d'appel, sont agencées de façon à relier chaque réponse parmi les variantes de réponse à un numéro prédéterminé prévu dans le central (120) pour chaque variante de réponse ;
- un moyen destiné à enregistrer dans une base (170) de données des informations concernant des tentatives d'appels amorcées en vue d'une liaison avec le numéro prédéterminé du central pour chaque variante de réponse, à enregistrer un service demandé (440) ou à déterminer d'autres messages ultérieurs à envoyer à ladite ou auxdites stations mobiles réceptrices (130) ;
**caractérisé en ce qu'**il comporte :
- un moyen destiné à couper des tentatives d'établissement d'appels provenant de ladite ou de chacune desdites stations mobiles réceptrices ;
- un moyen destiné à choisir, en réponse à une variante (240) de réponse identifiée, soit d'envoyer lesdits messages ultérieurs à ladite ou auxdites stations mobiles réceptrices (130), soit de couper la communication.

2. Central téléphonique selon la revendication 1,
**caractérisé en ce qu'**il comporte un moyen destiné à couper (230) des tentatives d'établissement d'appels provenant du réseau (110).

3. Central téléphonique selon la revendication 1,
**caractérisé en ce que** ledit central (120) est agencé de façon à envoyer un message de rejet (230) d'appel au réseau (110).

4. Central téléphonique selon les revendications 1 à 3, **caractérisé en ce que** ledit central (120) comporte un moyen destiné à confirmer la variante choisie par des messages vocaux ou des tonalités.

5. Central téléphonique selon l'une quelconque des revendications 1 à 4, **caractérisé en ce que** ledit central (120) est agencé de façon à envoyer (240) au moins une variante supplémentaire (220, 225) de réponse sur le réseau (110, 150), en fonction de la variante de réponse reçue.

6. Central téléphonique selon l'une quelconque des revendications 1 à 5, **caractérisé en ce que** la base (170) de données est reliée à un générateur de jeux agencé de façon à émettre des variantes de réponse liées à des activités du jeu.

7. Central téléphonique selon la revendication 6,
**caractérisé en ce que** les variantes de réponse dépendent de l'emplacement géographique de la station mobile (130) ou de l'heure.

8. Central téléphonique selon l'une quelconque des revendications 1 à 7, **caractérisé en ce qu'**il comporte un moyen destiné à envoyer au moins des parties d'une page issue d'un réseau ouvert ou fermé où des liens sont remplacés ou complétés par des numéros de variantes de réponse, permettant ainsi à la station mobile (130) d'amorcer l'émission de pages Internet via des tentatives d'établissement d'appels, sans se voir facturer le coût de l'appel.

9. Procédé d'exploitation d'un central téléphonique (120) auquel est intégré ou relié un ordinateur, et qui est relié à un réseau (110, 150) de données et de télécommunications, **caractérisé en ce qu'**il comporte les étapes consistant à :
- envoyer un message, comprenant au moins une variante de réponse, à au moins une station mobile réceptrice (130) via ledit réseau (110, 150), chaque variante de réponse étant associée à un numéro prédéterminé au sein dudit central (120) ;
- recevoir des variantes de réponse audit message choisies au niveau de ladite ou desdites stations mobiles (130) et qui, lors de l'amorce d'une tentative d'appel, sont agencées de façon à relier chaque réponse parmi les variantes de réponse à un numéro prédéterminé prévu dans le central (120) pour chaque variante de réponse ;
- enregistrer des tentatives d'appels amorcées vers le numéro prédéterminé du central, pour chaque variante de réponse, à un emplacement de mémoire dans une base (170) de données ;
- couper des tentatives d'appels provenant de ladite ou de chacune desdites stations mobiles réceptrices (130), la station mobile (130) n'étant alors pas soumise à une facturation de l'appel ; et
- choisir, en fonction d'une action couplée à une variante (240) de réponse identifiée, soit d'envoyer des messages ultérieurs à ladite ou auxdites stations mobiles réceptrices (130), soit de couper (230) l'émission.

10. Procédé selon la revendication 9, **caractérisé en ce qu'**il comporte en outre l'étape consistant à couper (230) des tentatives d'établissement d'appels provenant du réseau (110), un abonné identifié par un numéro A ne se voyant alors pas facturer la tentative d'établissement d'un appel.

11. Procédé selon la revendication 9, **caractérisé en ce que** l'étape consistant à couper l'appel fait intervenir l'envoi d'un message de rejet (230) d'appel au réseau (110), un abonné identifié par un numéro A ne se voyant alors pas facturer la tentative d'établissement d'un appel.

12. Procédé selon l'une quelconque des revendications 9 à 11, **caractérisé en ce qu'**il comporte l'étape supplémentaire consistant à confirmer la variante choisie par des messages vocaux ou des tonalités.

13. Procédé selon l'une quelconque des revendications 9 à 12, **caractérisé en ce qu'**il comporte l'étape supplémentaire consistant à envoyer (240) au moins une variante supplémentaire (220, 225) de réponse sur le réseau (110, 150), en fonction de la première variante de réponse reçue.

14. Procédé selon l'une quelconque des revendications 1 à 9, **caractérisé en ce qu'**il comporte l'étape supplémentaire consistant à envoyer au moins des parties d'une page issue d'un réseau ouvert ou fermé où des liens sont remplacés ou complétés par des numéros de variantes de réponse, permettant ainsi à la station mobile (130) d'amorcer l'émission de pages Internet via des tentatives d'établissement d'appels, sans se voir facturer le coût de l'appel.

15. Procédé selon l'une quelconque des revendications 1 à 6, **caractérisé par** une liaison de la base (170) de données à un générateur de jeux qui émet des variantes de réponse liées à des activités du jeu.

16. Procédé selon la revendication 15, **caractérisé en ce que** les variantes de réponse dépendent de l'emplacement géographique de la station mobile (130) ou de l'heure.
